# FASCICULE DE BREVET EUROPEEN

(11) **EP 1 086 581 B1**
(45) Date de publication et mention de la délivrance du brevet: **04.02.2004**
(21) Numéro de dépôt: 99923726.6
(22) Date de dépôt: 11.06.1999
(51) Int. Cl.: H04N 5/225

(54) **SYSTEME D'ASSEMBLAGE D'UN COMPOSANT SUR UN DISPOSITIF OPTIQUE**
BEFESTIGUNGSSYSTEM FÜR EINEN BAUSTEIN AUF EINEM OPTISCHEN ELEMENT
SYSTEM FOR ASSEMBLING A COMPONENT ON AN OPTICAL DEVICE

(30) Priorité: 12.06.1998 FR 9807443
(43) Date de publication de la demande: 28.03.2001
(73) Titulaire: Thales, 75008 Paris (FR)
(72) Inventeur: BRUNEL, Alain, Thomson-CSF Prop. Int. Dépt. Brev., 94117 Arcueil Cedex (FR); PEYRON, Bruno, Thomson-CSF Prop. Int. Dépt. Brev., 94117 Arcueil Cedex (FR); REBOULET, Christophe, Thomson-CSF Prop. Int. Dép., 94117 Arcueil Cedex (FR)
(74) Mandataire: Vigand, Régis Louis Michel
(86) Numéro de dépôt international: PCT/FR1999/001392
(87) Numéro de publication internationale: WO 1999/066715

(56) Documents cités:
- EP-A- 0 753 893
- US-A- 4 623 916
- US-A- 5 570 231
- PATENT ABSTRACTS OF JAPAN vol. 097, no. 006, 30 juin 1997 (1997-06-30) & JP 09 037275 A (SONY CORP), 7 février 1997 (1997-02-07)
- PATENT ABSTRACTS OF JAPAN vol. 097, no. 009, 30 septembre 1997 (1997-09-30) & JP 09 130652 A (VICTOR CO OF JAPAN LTD), 16 mai 1997 (1997-05-16)
- PATENT ABSTRACTS OF JAPAN vol. 010, no. 329 (E-452), 8 novembre 1986 (1986-11-08) & JP 61 135279 A (SONY CORP), 23 juin 1986 (1986-06-23)

## Description

L'invention concerne le domaine de l'assemblage de composant sur un dispositif optique. Le terme optique doit s'entendre au sens large et couvre tout le spectre électromagnétique. L'invention s'applique de préférence à l'assemblage d'un ou de plusieurs capteurs sur un séparateur spectral. Ce séparateur fonctionne par exemple dans le domaine visible. Le but de l'invention est la réalisation d'un système d'assemblage qui permette de positionner et de fixer le composant sur le dispositif optique de manière rapide et précise.

Pour cela, il existe plusieurs systèmes dans l'art antérieur. Les systèmes de l'art antérieur procèdent généralement par collage dit « pleine face », c'est-à-dire par un collage d'une surface étendue du composant sur le dispositif optique.

Un premier système d'assemblage de l'art antérieur, décrit dans le brevet US4916529, utilise de la soudure ordinaire intercalée entre des îlots de soudure verre, cette soudure de verre étant décrite dans la demande de brevet JP 20098/1968. Ce système a l'inconvénient de soumettre le composant et le dispositif optique à des températures élevées, ce qui risque de les endommager. Ce système a encore l'inconvénient de ne pas conserver à la température ambiante de fonctionnement les réglages précis effectués lors de l'assemblage à une température plus élevée.

Un deuxième système d'assemblage de l'art antérieur, décrit dans le brevet JP 5207382, immerge au cours de l'assemblage le composant dans une cavité remplie de résine. Ce système a l'inconvénient de ne pas permettre un démontage aisé sans détérioration du dispositif optique et du composant.

Un troisième système d'assemblage de l'art antérieur, décrit dans le brevet JP 5828790, propose l'assemblage du composant sur le dispositif optique par l'intermédiaire d'un support à l'aide d'un système flexible complexe, par collage rigide définitif. Ce système a l'inconvénient de présenter des composants mécaniques élaborés et un processus d'intégration complexe . Ce système a encore l'inconvénient d'empêcher un démontage aisé sans détérioration du dispositif optique et du composant.

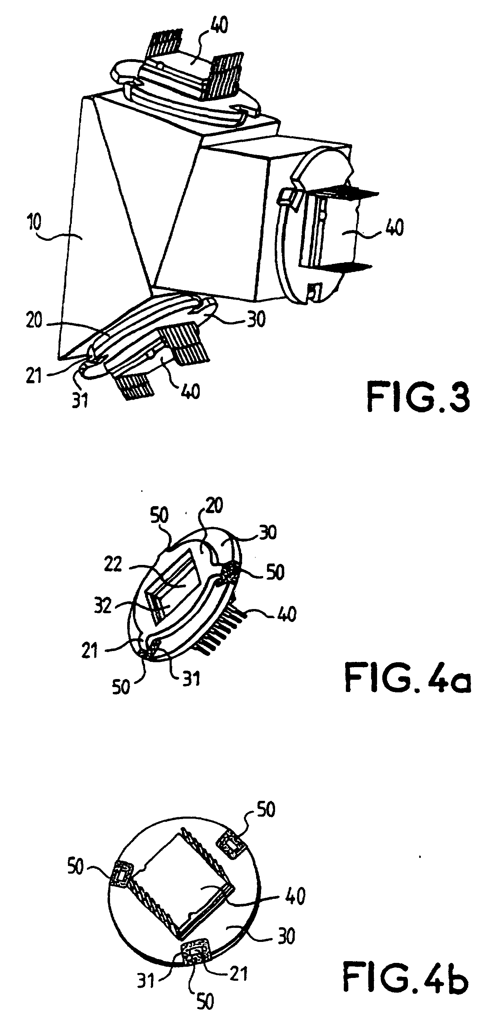

Le document US - A - 4 623 916 décrit un ensemble de capture d'image pour une caméra de télévision comportant un assemblage de 3 capteurs sur un séparateur spectral comportant 2 pièces intermédiaires (34 et 36), les capteurs étant montés chacun sur un support, soit double (66) soit monobloc (figure 3: 72), ce qui fait donc 3 supports. Ces derniers sont collés de manière détachable aux pièces intermédiaires à des endroits ayant des formes complémentaires.

D'autre part, le document US - A - 5 570 231 décrit le même type de système comportant 2 capteurs sur des substrats usinés pour pouvoir être directement introduits sur un support unique comportant un séparateur spectral. Le support est également usiné à la forme complémentaire des substrats, de telle manière qu'un jeu latéral en translation et rotation soit obtenu, permettant un ajustement précis des capteurs sur le support. Les substrats sont alors collés dans la position ajustée sur le support au niveau des formes complémentaires.

L'invention propose un système d'assemblage rapide, précis, stable dans le temps, comportant des éléments simples et permettant un démontage aisé et sans détérioration du composant et du dispositif optique.

Selon l'invention, il est prévu un système d'assemblage de plusieurs capteurs sur un séparateur spectral tel que défini dans la revendication 1.

De préférence, les points de collage sont situés sur une partie périphérique du support et de la pièce intermédiaire. Le démontage du système est alors facilité. Le démontage du système permet la maintenance du système. Cette maintenance consiste par exemple à changer le composant en conservant le dispositif optique.

De préférence, les formes complémentaires comportent des complémentarités au niveau desquelles sont situés les points de collage. Le système est alors plus simple et plus efficace.

De préférence, le support et la pièce intermédiaire comportent chacun au moins une zone de passage d'une liaison optique entre le dispositif optique et le composant. Par conséquent, le système ne complique pas le passage de la liaison optique entre le dispositif optique et le composant.

L'invention sera mieux comprise et d'autres caractéristiques et avantages apparaîtront à l'aide de la description ci-après et des dessins joints, donnés à titre d'exemples non limitatifs, où :
- la figure 1 représente schématiquement une vue en trois dimensions du dispositif optique et de la pièce intermédiaire selon l'invention.
- la figure 2a représente schématiquement une vue en trois dimensions du composant et du support selon l'invention.
- la figure 2b représente schématiquement une vue de face du support selon l'invention.
- la figure 3 représente schématiquement une vue en trois dimensions du système d'assemblage selon l'invention de plusieurs composants sur le dispositif optique.
- les figures 4a, 4b et 5 représentent schématiquement des points de collage entre la pièce intermédiaire et le support selon l'invention.
- la figure 6 représente schématiquement une vue éclatée en trois dimensions du joint de protection selon l'invention situé entre la pièce intermédiaire et le support.
- la figure 7 représente schématiquement une vue en trois dimensions d'un autre mode de réalisation du système d'assemblage selon l'invention.

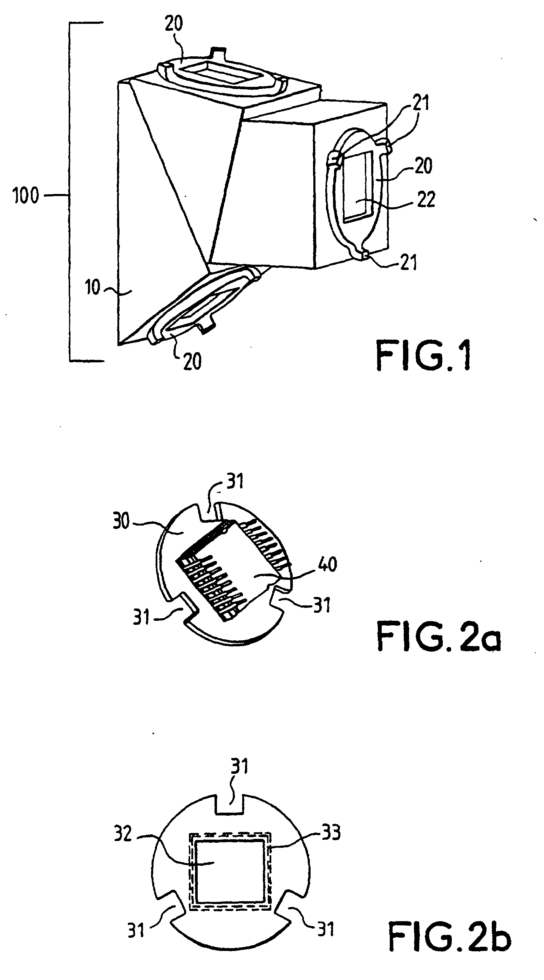

Le système d'assemblage selon l'invention d'au moins un composant sur un dispositif optique peut être utilisé pour l'assemblage de divers composants sur divers dispositifs optiques. Une application préférentielle concerne l'assemblage de capteurs sur un séparateur spectral. Les capteurs peuvent être des capteurs CCD. Le séparateur spectral peut être un séparateur à prismes fonctionnant avantageusement dans le domaine du visible. Les figures 1 à 7 décrivent, à titre illustratif et non limitatif, le système d'assemblage de l'invention dans cette application préférentielle.

La figure 1 représente schématiquement une vue en trois dimensions du dispositif optique 10 et de pièces intermédiaires 20. Sur cette figure 1, le dispositif optique 10 étant un séparateur spectral, il y a plusieurs pièces intermédiaires 20, par exemple trois. Les pièces intermédiaires 20 sont de préférence identiques. Une pièce intermédiaire 20 comporte des complémentarités 21 qui sont complémentaires avec les complémentarités 31 du support 30 de la figure 2a. La pièce intermédiaire 20 comporte également de préférence une zone de passage 22 permettant le passage d'au moins une liaison optique à partir du dispositif optique 10. La pièce intermédiaire 20 est montée sur le dispositif optique 10 ; elle est de préférence fixée, cette fixation pouvant être réalisée par divers moyens. La pièce intermédiaire 20 est par exemple, d'abord positionnée au moyen d'un outillage simple, puis collée sur le dispositif optique 10.

La figure 2a représente schématiquement une vue en trois dimensions du composant 40 et du support 30. Le composant 40 est monté sur le support 30 ; il est de préférence fixé, cette fixation pouvant être réalisée par divers moyens. Le composant 40 est par exemple, d'abord positionné au moyen d'un outillage simple, puis collé sur le support 30. Le support 30 comporte des complémentarités 31 qui sont complémentaires avec les complémentarités 21 de la pièce intermédiaire 20 de la figure 1.

La figure 2b représente schématiquement une vue de face du support 30. Le support 30 comporte également de préférence une zone de passage 32 permettant le passage d'au moins une liaison optique à partir du dispositif optique 10. Le support 30 comporte par exemple aussi une surface de collage 33 sur laquelle le composant 40 est collé. Les zones de passage 32, respectivement 22, peuvent être constituées de matériaux transparents au rayonnement optique considéré ; elles peuvent également être tout simplement des trous réalisés dans le support 30, respectivement dans la pièce intermédiaire 20.

La figure 3 représente schématiquement une vue en trois dimensions du système d'assemblage 100 de plusieurs composants 40 sur un dispositif optique 10. Le support 30, sur lequel est fixé le composant 40, s'emboîte dans la pièce intermédiaire 20 fixée sur le dispositif optique 10. L'emboîtement s'effectue entre les complémentarités 21 de la pièce intermédiaire 20 et les complémentarités 31 du support 30. Les formes complémentaires entre la pièce intermédiaire 20 et le support 30 comportent par exemple des ergots et des rainures comme sur la figure 3. Dans une autre réalisation, elles peuvent comporter des pions et des alésages par exemple. Dans le cas préférentiel du séparateur spectral, le jeu subsistant entre les formes complémentaires est par exemple typiquement de l'ordre de quelques dixièmes de millimètres. De préférence, après ce positionnement grossier par emboîtement des formes complémentaires, est ensuite réalisé un positionnement fin. Ce positionnement fin du support 30 par rapport à la pièce intermédiaire 20, c'est-à-dire du composant 40 par rapport au dispositif optique 10, est réalisé à l'aide d'un système mécanique d'intégration et de réglage, avantageusement de grande précision et couplé à une analyse d'image.

Dans le cas préférentiel du séparateur spectral, ce réglage fin, qui consiste à superposer les voies optiques du séparateur spectral, à mesurer et à minimiser l'écart entre ces voies, est réalisé par un système de déplacement d'axe à six degrés de liberté. En effet, le positionnement fin doit alors être effectué longitudinalement, en basculement, en rotation par rapport au plan formé par la surface du support 30 et par la pièce intermédiaire 20, et en excentrement relatif. Le positionnement fin longitudinal permet d'obtenir la meilleure focalisation de l'ensemble constitué par le séparateur spectral et par les capteurs. Le positionnement dans les autres dimensions permet d'optimiser la qualité image de cet ensemble dans tout le champ image utilisé. Le jeu subsistant entre les formes complémentaires à l'issue du positionnement fin est par exemple typiquement inférieur au micromètre.

L'invention n'est pas limitée à un support 30 et une pièce intermédiaire qui soient monoblocs comme sur les figures précédentes. Cependant, de par leur simplicité, un support 30 monobloc et une pièce intermédiaire 20 monobloc correspondent à une réalisation préférentielle de l'invention.

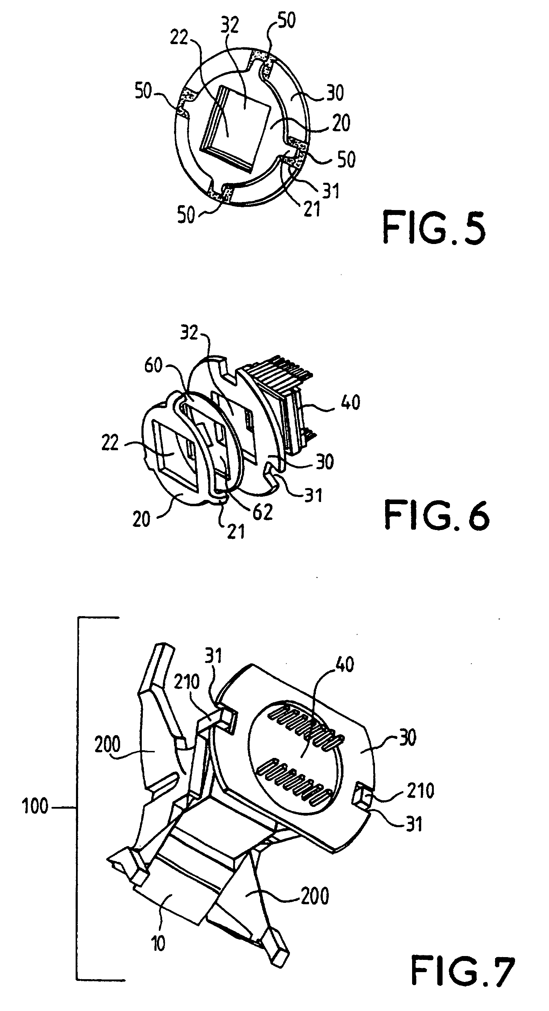

Les figures 4a et 4b représentent schématiquement des points 50 de collage entre la pièce intermédiaire 20 et le support 30. Les points 50 de collage permettent de coller le support 30 et la pièce intermédiaire 20 ensemble. Ces points 50 sont de préférence situés au niveau des complémentarités 21 de la pièce intermédiaire 20 et des complémentarités 31 du support 30. Les points 50 ont avantageusement une surface suffisamment faible pour permettre le démontage du support 30 sans détérioration du dispositif optique 10, de la pièce intermédiaire 20 ou du composant 40. Les points 50 sont préférentiellement situés sur une partie périphérique du support 30 et de la pièce intermédiaire 20, ce qui facilite le démontage en rendant ces points 50 faciles d'accès par exemple pour un éventuel solvant. De préférence, les points 50 sont au nombre de trois, avantageusement situés à distance sensiblement égale les uns des autres, ce qui rend le système d'assemblage moins dépendant des contraintes qui pourront s'y exercer pendant son fonctionnement. La figure 5 représente schématiquement une autre réalisation du système d'assemblage selon l'invention, ayant quatre points 50 de collage entre la pièce intermédiaire 20 et le support 30. La liaison optique entre le dispositif optique 10 et le composant 40 passe de préférence au travers de la zone de passage 22 de la pièce intermédiaire 20 et au travers de la zone de passage 32 du support 30.

Le collage est réalisé de préférence avec une colle. Cette colle possède avantageusement plusieurs propriétés décrites ci-après. Tout d'abord, il est préférable que la colle ait une viscosité élevée, ce qui lui permet de rester en place pendant l'opération de collage. Ensuite, il est préférable que la colle ait un retrait faible, c'est-à-dire qu'elle se resserre peu sur elle-même pendant l'opération de collage. Cela permet de conserver pendant l'opération de collage un positionnement fin du composant 40 par rapport au dispositif optique 10 plus facilement. Enfin, il est préférable que la colle, tout en restant stable pendant le fonctionnement du dispositif optique 10, soit facilement soluble afin de faciliter un éventuel démontage visant par exemple à changer le composant 40 ou toute autre opération de maintenance.

Le type de collage utilisé est préférentiellement un collage rapide par polymérisation contrôlée à température ambiante. Le collage réalisé à température ambiante permet d'éviter une instabilité du positionnement fin du système d'assemblage, lors du passage du système d'assemblage de sa température de collage à sa température de fonctionnement. La polymérisation contrôlée permet de conserver plus facilement le positionnement fin pendant toute la durée de la polymérisation. En effet, ce contrôle continu permet de suivre le positionnement relatif du composant 40 par rapport au dispositif optique 10 pendant l'opération de collage, afin de maintenir ce positionnement constant. Un collage rapide n'impose de conserver ce positionnement fin que pendant un temps assez court.

Ce collage rapide par polymérisation contrôlée à température ambiante peut être réalisé par l'intermédiaire de diverses colles. De préférence, le système d'assemblage selon l'invention utilise, soit une résine monocomposant, sans solvant, polymérisant aux rayons ultraviolets, du type VITRALIT 6128VT (VITRALIT est une marque déposée) appelée ci-après résine monocomposant, soit une colle acrylique structurale bicomposant, du type PENLOC GTI-S (PENLOC est une marque déposée) appelée ci-après colle acrylique. Les fixations respectives du composant 40 sur le support 30 et de la pièce intermédiaire 20 sur le dispositif optique 10 peuvent aussi par exemple être réalisées à l'aide de ces colles.

La résine monocomposant peut être dissoute avec un solvant type « Panasolve 100 » (marque déposée). Elle est plus facile d'emploi qu'une colle acrylique bicomposant laquelle nécessite un dosage précis des deux composants pendant l'opération de collage. Son temps de prise est également sensiblement plus court que celui d'une colle acrylique.

La colle acrylique est soluble dans de l'acétone. Elle sèche à l'air ambiant et ne nécessite pas l'utilisation de rayons ultraviolets comme la résine monocomposant. L'utilisation de l'une ou l'autre de ces colles sera déterminée par l'application envisagée.

Le collage peut aussi être réalisé autrement, par exemple par brasure froide.

La figure 6 représente schématiquement une vue éclatée en trois dimensions d'un joint 60 de protection optionnel situé entre la pièce intermédiaire 20 et le support 30. Une liaison optique entre le dispositif optique 10 et le composant 40 peut passer au travers de la zone de passage 62. Le joint 60 permet d'isoler des points 50 de collage les différentes zones de passage 22, 32 et 62, ce qui limite fortement le risque de coulée de colle dans les zones de passage 22, 32 et 62 de la liaison optique entre le dispositif optique 10 et le composant 40. Ce joint 60 permet également de protéger de l'environnement extérieur les zones de passage 22, 32 et 62. Ce joint 60 est de préférence en matière souple.

La figure 7 représente schématiquement une vue en trois dimensions d'un autre mode de réalisation du système d'assemblage 100. La pièce intermédiaire 200 est intégrée au dispositif optique 10. Sur la figure 7, le dispositif optique 10 est un séparateur spectral à prismes et la pièce intermédiaire 200 est constituée par les joues de maintien des prismes. La pièce intermédiaire 200 comporte des complémentarités 210 qui ont le même rôle que les complémentarités 21 des figures précédentes.

Les matériaux composant le dispositif optique 10, la pièce intermédiaire 20 et le support 30, ont avantageusement des coefficients de dilatation thermique sensiblement égaux, de façon à ce que leur positionnement relatif varie le moins possible avec la température de fonctionnement du système d'assemblage. Lorsque le dispositif optique est en verre, les matériaux composant la pièce intermédiaire 20 et le support 30 sont de préférence des métaux ayant un coefficient de dilatation thermique proche de celui du verre, par exemple le titane, le kovar ou certaines variétés d'acier inoxydable. Il est également possible d'utiliser des matériaux plastiques traités afin d'obtenir le coefficient de dilatation voulu.

## Revendications

1. Système d'assemblage de plusieurs capteurs (40) sur un séparateur spectral (10), chaque capteur (40) étant monté sur un support (30), le système comportant des pièces intermédiairés (20) montées sur le séparateur spectral (10), chaque support (30) et chaque pièce intermédiaire (20) associée ayant des formes complémentaires assemblées par plusieurs points (50) de collage, les points (50) de collage ayant une surface suffisamment faible pour permettre un démontage des supports (30) sans détérioration du séparateur spectral optique (10), des pièces intermédiaires (20) ou des capteurs (40), chaque support étant associé à une seule pièce intermédiaire et chaque pièce intermédiaire étant associée à un seul support, et les pièces intermédiaires (20) et les supports (30) étant monoblocs et indépendants les uns des autres.

2. Système d'assemblage selon la revendication 1, **caractérisé en ce que** les points (50) de collage sont situés sur une partie périphérique du support (30) et de la pièce intermédiaire (20).

3. Système d'assemblage selon l'une quelconque des revendications précédentes, **caractérisé en ce que** les formes complémentaires comportent des complémentarités (21, 31) au niveau desquelles sont situés les points (50) de collage.

4. Système d'assemblage selon l'une quelconque des revendications précédentes, **caractérisé en ce que** le support (30) et la pièce intermédiaire (20) comportent chacun au moins une zone de passage (32, 22) d'une liaison optique entre le séparateur spectral (10) et le capteur (40).

5. Système d'assemblage selon la revendication 4, **caractérisé en ce que** le système comporte un joint (60) de protection souple situé entre le support (30) et la pièce intermédiaire (20), entre les zones de passage (22, 32) et les points (50) de collage.

6. Système d'assemblage selon l'une quelconque des revendications précédentes, **caractérisé en ce que** les formes complémentaires comportent des ergots et des rainures.

7. Système d'assemblage selon l'une des revendications 1 à 5, **caractérisé en ce que** les formes complémentaires comportent des pions et des alésages.

8. Système d'assemblage selon l'une quelconque des revendications précédentes, **caractérisé en ce que** les points (50) de collage sont au nombre de trois et sont situés à distance sensiblement égale les uns des autres.

9. Système d'assemblage selon l'une quelconque des revendications précédentes, **caractérisé en ce que** le collage est réalisé avec une colle stable mais facilement soluble, ayant une viscosité élevée et un retrait linéaire faible.

10. Système d'assemblage selon l'une quelconque des revendications précédentes, **caractérisé en ce que** le collage est un collage rapide par polymérisation contrôlée à température ambiante.

11. Système d'assemblage selon la revendication 10, **caractérisé en ce que** la colle est une résine monocomposant, sans solvant, polymérisant aux rayons ultraviolets.

12. Système d'assemblage selon la revendication 10, **caractérisé en ce que** la colle est une colle acrylique structurale bicomposant.

13. Système d'assemblage selon l'une quelconque des revendications 1 à 8, **caractérisé en ce que** le collage est réalisé par brasure froide.

14. Système d'assemblage selon l'une quelconque des revendications précédentes, **caractérisé en ce que** le support (30), la pièce intermédiaire (20) et le séparateur spectral (10), sont composés de matériaux ayant des coefficients de dilatation thermique sensiblement égaux.

15. Système d'assemblage selon la revendication 14, **caractérisé en ce que** les matériaux composant le support (30) et la pièce intermédiaire (20) sont des métaux.

## Patentansprüche

1. System für die Anbringung mehrerer Sensoren (40) an einem Spektralseparator (10), wobei jeder Sensor (40) an einem Träger (30) angebracht ist, wobei das System Zwischenteile (20) umfasst, die an dem Spektralseparator (10) angebracht sind, wobei jeder Träger (30) und jedes zugeordnete Zwischenteil (20) komplementäre Formen besitzen, die durch mehrere Klebepunkte (50) zusammengefügt sind, wobei die Klebepunkte (50) eine ausreichend kleine Oberfläche besitzen, um eine Abnahme der Träger (30) von den Zwischenteilen (20) oder von den Sensoren (40) ohne Beschädigung des optischen Spektralseparators (10) zu ermöglichen, wobei jedem Träger ein einziges Zwischenteil zugeordnet ist und jedes Zwischenteil einem einzigen Träger zugeordnet ist und wobei die Zwischenteile (20) und die Träger (30) einteilig und voneinander unabhängig sind.

2. Montagesystem nach Anspruch 1, **dadurch gekennzeichnet, dass** sich die Klebepunkte (50) auf einem Umfangsabschnitt des Trägers (30) und des Zwischenteils (20) befinden.

3. Montagesystem nach einem der vorhergehenden Ansprüche, **dadurch gekennzeichnet, dass** die komplementären Formen komplementäre Elemente (21, 31) besitzen, auf deren Höhe sich die Klebepunkte (50) befinden.

4. Montagesystem nach einem der vorhergehenden Ansprüche, **dadurch gekennzeichnet, dass** der Träger (30) und das Zwischenteil (20) jeweils wenigstens eine Durchgangszone (32, 22) für eine optische Verbindung zwischen dem Spektralseparator (10) und dem Sensor (40) aufweisen.

5. Montagesystem nach Anspruch 4, **dadurch gekennzeichnet, dass** das System eine nachgiebige Schutzdichtung (60) aufweist, die sich zwischen dem Träger (30) und dem Zwischenteil (20) zwischen den Durchgangszonen (22, 32) und den Klebepunkten (50) befindet.

6. Montagesystem nach einem der vorhergehenden Ansprüche, **dadurch gekennzeichnet, dass** die komplementären Formen Vorsprünge und Nuten umfassen.

7. Montagesystem nach einem der Ansprüche 1 bis 5, **dadurch gekennzeichnet, dass** die komplementären Formen Zapfen und Bohrungen umfassen.

8. Montagesystem nach einem der vorhergehenden Ansprüche, **dadurch gekennzeichnet, dass** die Klebepunkte (50) in der Anzahl drei vorhanden sind und in gegenseitigen Abständen angeordnet sind, die im Wesentlichen gleich sind.

9. Montagesystem nach einem der vorhergehenden Ansprüche, **dadurch gekennzeichnet, dass** die Klebung mit einem stabilen, jedoch leicht löslichen Klebstoff verwirklicht ist, der eine hohe Viskosität und einen geringen linearen Schwund besitzt.

10. Montagesystem nach einem der vorhergehenden Ansprüche, **dadurch gekennzeichnet, dass** die Klebung eine schnelle Klebung durch kontrollierte Polymerisation bei Umgebungstemperatur ist.

11. Montagesystem nach Anspruch 10, **dadurch gekennzeichnet, dass** der Klebstoff ein einkomponentiges Harz ohne Lösungsmittel ist, das mittels Ultraviolettstrahlen polymerisiert.

12. Montagesystem nach Anspruch 10, **dadurch gekennzeichnet, dass** der Klebstoff ein Zweikomponenten-Strukturacrylklebstoff ist.

13. Montagesystem nach einem der Ansprüche 1 bis 8, **dadurch gekennzeichnet, dass** die Klebung durch Kaltlöten verwirklicht ist.

14. Montagesystem nach einem der vorhergehenden Ansprüche, **dadurch gekennzeichnet, dass** der Träger (30), das Zwischenteil (20) und der Spektralseparator (10) aus Materialien zusammengesetzt sind, die im Wesentlichen gleiche Wärmeausdehnungskoeffizienten besitzen.

15. Montagesystem nach Anspruch 14, **dadurch gekennzeichnet, dass** die den Träger (30) und das Zwischenteil (20) bildenden Werkstoffe Metalle sind.

## Claims

1. System for assembling several sensors (40) onto a spectral splitter (10), each sensor (40) being mounted on a support (30), the system having intermediate pieces (20) mounted on the spectral splitter (10), each support (30) and each associated intermediate piece (20) having complementary shapes joined together by several spots of bonding material (50), the spots of bonding material (50) having a sufficiently small area to allow the supports (30) to be disconnected without damage to the optical spectral splitter (10), to the intermediate pieces (20) or to the sensors (40), each support being associated with a single intermediate piece and each intermediate piece being associated with a single support, and the intermediate pieces (20) and the supports (30) being one-piece parts that are independent of one another.

2. Assembling system according to Claim 1, **characterized in that** the spots of bonding material (50) are located on a peripheral part of the support (30) and of the intermediate piece (20).

3. Assembling system according to either of the preceding claims, **characterized in that** the complementary shapes comprise complementary features (21, 31) where the spots of bonding material (50) are located.

4. Assembling system according to any one of the preceding claims, **characterized in that** the support (30) and the intermediate piece (20) each have at least one region (32, 22) for passage of an optical link between the spectral splitter (10) and the sensor (40).

5. Assembling system according to Claim 4, **characterized in that** the system includes a flexible protective gasket (60) located between the support (30) and the intermediate piece (20), between the passage regions (22, 32) and the spots of bonding material (50) .

6. Assembling system according to any one of the preceding claims, **characterized in that** the complementary forms comprise lugs and grooves.

7. Assembling system according to any one of Claims 1 to 5, **characterized in that** the complementary shapes comprise pins and bores.

8. Assembling system according to any one of the preceding claims, **characterized in that** the spots of bonding material (50) are three in number and are located at approximately the same distance from one another.

9. Assembling system according to any one of the preceding claims, **characterized in that** the bonding is achieved by means of a stable readily soluble adhesive having a high viscosity and a low linear shrinkage.

10. Assembling system according to any one of the preceding claims, **characterized in that** the bonding is rapid bonding by controlled curing at room temperature.

11. Assembling system according to Claim 10, **characterized in that** the adhesive is a one-component, solventless, UV-curable resin.

12. Assembling system according to Claim 10, **characterized in that** the adhesive is a two-component structural acrylic adhesive.

13. Assembling system according to any one of Claims 1 to 8, **characterized in that** the bonding is cold bonding.

14. Assembling system according to any one of the preceding claims, **characterized in that** the support (30), the intermediate piece (20) and the spectral splitter (10) are composed of materials having approximately equal thermal expansion coefficients.

15. Assembling system according to Claim 14, **characterized in that** the materials making up the support (30) and the intermediate piece (20) are metals.
